# EUROPÄISCHE PATENTSCHRIFT

(11) **EP 2 258 082 B1**
(45) Veröffentlichungstag und Bekanntmachung des Hinweises auf die Patenterteilung: **16.11.2011**
(21) Anmeldenummer: 09728230.5
(22) Anmeldetag: 02.04.2009
(51) Int. Cl.: H04L 12/40

(54) **VERFAHREN ZUR SICHEREN DYNAMISCHEN BANDBREITENALLOKATION IN TT-ETHERNET**
METHOD FOR SECURE DYNAMIC BANDWIDTH ALLOCATION IN TT ETHERNET
PROCÉDÉ D'ATTRIBUTION DYNAMIQUE DE BANDE PASSANTE SÉCURISÉE SUR TT-ETHERNET

(30) Priorität: 03.04.2008 AT 5272008
(43) Veröffentlichungstag der Anmeldung: 08.12.2010
(73) Patentinhaber: FTS Computertechnik Gmbh, 1040 Wien (AT)
(72) Erfinder: POLEDNA, Stefan, A-3400 Klosterneuburg (AT)
(74) Vertreter: Patentanwaltskanzlei Matschnig & Forsthuber OG
(86) Internationale Anmeldenummer: PCT/AT2009/000130
(87) Internationale Veröffentlichungsnummer: WO 2009/121087

(56) Entgegenhaltungen:
- WO-A-2007/085028
- KOPETZ H ET AL: "The Time-Triggered Ethernet (TTE) Design" OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005, PISCATAWAY, NJ, USA,IEEE, 18. Mai 2005 (2005-05-18), Seiten 22-33, XP010801230 ISBN: 978-0-7695-2356-9
- MARCO SERAFINI ET AL: "A Tunable Add-On Diagnostic Protocol for Time-Triggered Systems" DEPENDABLE SYSTEMS AND NETWORKS, 2007. DSN '07. 37TH ANNUAL IEEE/IFIP INTERNATIONAL CONFERENCE ON, IEEE, PI, 1. Juni 2007 (2007-06-01), Seiten 164-174, XP031116420 ISBN: 978-0-7695-2855-7

## Beschreibung

Diese Erfindung betrifft ein Verfahren und einen Apparat zur sicheren dynamischen Bandbreitenallokation in TT-Ethernet entsprechend dem Oberbegriff von Anspruch 1 bzw. Anspruch 15.

Die WO 2007/085028 A offenbart ein TT-(time-triggered) Ethernet Kommunikationssystem, welches sowohl TTE (time-tiggered Ethernet) als auch ETE (event triggered Ethernet) Nachrichten übertragen kann. Bei ETE Nachrichten werden zeitliche Konflikte akzeptiert, während für die TOTE Nachrichten keine Konflikte erlaubt sind. Deswegen gibt es für TTE Nachrichten einen statischen Zeitplan, welcher in jedem TTE Sternkoppler des Netzwerks gespeichert ist und von jedem TTE Sternkoppler zum Scheduling der Nachrichtenübertragung der zugehörigen Netzwerkknoten verwendet wird.

In der EP 1 512 254 wird ein Verfahren offen gelegt, das es ermöglicht, zeitgesteuerte Nachrichten mit guten Echtzeiteigenschaft in einem erweiterten Ethernetsystem - im folgenden TT-(time-triggered) Ethernet genannt - zu übertragen. In TT-Ethernet wird zwischen zwei Nachrichtenkategorien unterschieden, den ETE Nachrichten, das sind die herkömmlichen event-triggered Ethernet Nachrichten und den TTE-Nachrichten, das sind die neuen time-tiggered Ethernet Nachrichten.

Während die ETE Nachrichten aus einer zeitlich unkoordinierten offenen Umgebung kommen und daher im zeitlichen Konflikt zueinander stehen können, wird in TT-Ethernet vorausgesetzt, dass alle TTE-Nachrichten aus einem geschlossenen TTE-Netzwerk kommen und zeitgesteuert entsprechend einem a priori von einem TTE-Nachrichtenscheduler festgelegten konfliktfreien Zeitplan ohne wechselseitige Behinderung übertragen werden können. Das geschlossene TTE-Netzwerk besteht aus einer Anzahl von Knotenrechnern, die über einen oder mehrere TTE-Sternkoppler kommunizieren. Da das geschlossenen TTE-Netzwerk auch eine Verbindung zur offenen Welt der ETE-Nachrichten haben kann, oder ETE-Nachrichten innerhalb des TTE-Netzwerkes generiert werden können, kann es zu einem zeitlichen Konflikt zwischen einer (aus einer geschlossenen Umgebung stammenden) TTE-Nachricht und einer (aus einer offenen Umgebung stammenden) ETE Nachricht kommen. In einem solchen Konfliktfall wird in TT-Ethernet entsprechend der EP 1 512 254 die Übertragung der ETE Nachricht vom TTE-Sternkoppler unterbrochen, um die TTE-Nachricht innerhalb einer garantierten kleinen Übertragungszeit übertragen zu können. Nach Übertragung der TTE-Nachricht sendet der TTE-Sternkoppler autonom erneut die unterbrochene ETE Nachricht. Der TTE-Sternkoppler behandelt alle ETE Nachrichten entsprechend dem Ethernet Standard (IEEE Ethernet Standard 802.3, URL: http://standards.ieee.org). Die unter gewissen Umständen längere Übertragungsdauer von ETE Nachrichten (Unterbrechung und erneutes Senden einer unterbrochenen ETE-Nachricht durch den TTE-Sternkoppler) ist standardkonform, da der Standard keine Angabe über die Übertragungsdauer enthält.

Der Zeitplan, wann eine TTE-Nachricht zu senden ist, kann entweder in der TTE-Nachricht oder im TTE-Sternkoppler (oder in beiden) enthalten sein. Wenn der Zeitplan im TTE-Sternkoppler gespeichert ist, so ergeben sich folgende Nachteile:
(i) bei einer Änderung des Zeitplans müssen nicht nur der sendende Knotenrechner, sondern auch alle betroffenen TTE-Sternkoppler geändert werden.
(ii) bei einem transienten Ausfall eines Sternkopplers kann der im Esternkoppler gespeicherte Zeitplan verloren gehen. Der Sternkoppler fällt dann aus, bis er von einem authorisierten TTE-Nachrichtenscheduler einen neuen Zeitplan erhalten hat.

Dieses Problem tritt nicht auf, wenn die Zeitplan-Information, wie in der EP 1512 254 angeführt, in der TTE-Nachricht enthalten ist. Jedoch kann in diesem Fall ein fehlerhafter oder bösartiger Knotenrechner einen falschen Zeitplan in die TTE Nachricht einbetten und so alle anderen Knotenrechner stören.

Das hier beschriebene erfindungsgemäße Verfahren entsprechend dem Kennzeichen des Anspruchs 1 löst dieses Problem, so dass der TTE-Sternkoppler weitgehend zustandsfrei bleibt, d.h. keine Zeitpläne speichern muss, und trotzdem ein fehlerhafter oder bösartiger Knotenrechner die Kommunikation der anderen Knotenrechner nicht stören kann. Dieses Verfahren ermöglicht somit eine effiziente dynamische und trotzdem sichere Bandbreitenallokation von TTE-Nachrichten.

Durch diese Erfindung ergeben sich folgende signifikante wirtschaftliche Vorteile:
- Die Echtzeitdatenübertragung in einem TT Ethernet System kann dynamisch geändert werden, ohne eine Neuprogrammierung der TTE-Sternkoppler vornehmen zu müssen.
- Vor allem im Bereich der Multimediakommunikation ist eine dynamische Änderung der Zeitpläne von großem Vorteil, da sie zu signifikanten Bandbreiteneinsparungen führt.

Die vorliegende Erfindung ermöglicht in einem verteilten Echtzeitcomputersystem, in dem eine Anzahl von Knotenrechnern über einen oder mehreren Kommunikationskanäle mittels TT-Ethernet (TTE) Nachrichten in Echtzeit kommunizieren, eine sichere dynamische Änderung der Bandbreitenallokation der TTE-Nachrichten. Eine solche sichere dynamische Änderung der Bandbreitenallokation ist vor allem in Multimedia Anwendungen von großer Wichtigkeit.

Weitere Vorteile der Erfindung sind in den abhängigen Ansprüchen geoffenbart.

Das vorab beschriebene Ziel und andere neue Eigenschaften der vorliegenden Erfindung werden in der Zeichnung näher erläutert. In dieser zeigt
Fig. 1 den Aufbau eines verteilten Computersystems mit zwei TTE-Sternkoppler,
Fig. 2 eine Nachrichtenfolge, welche eine dynamische Änderung des Zeitplans ermöglicht,
Fig. 3 den Aufbau einer TTE-Nachricht, und
Fig. 4 den Inhalt des Datenfeldes einer Konfigurationsnachricht.

Im folgenden Abschnitt wird eine Realisierung des neuen Verfahrens an einem konkreten Beispiel gezeigt.

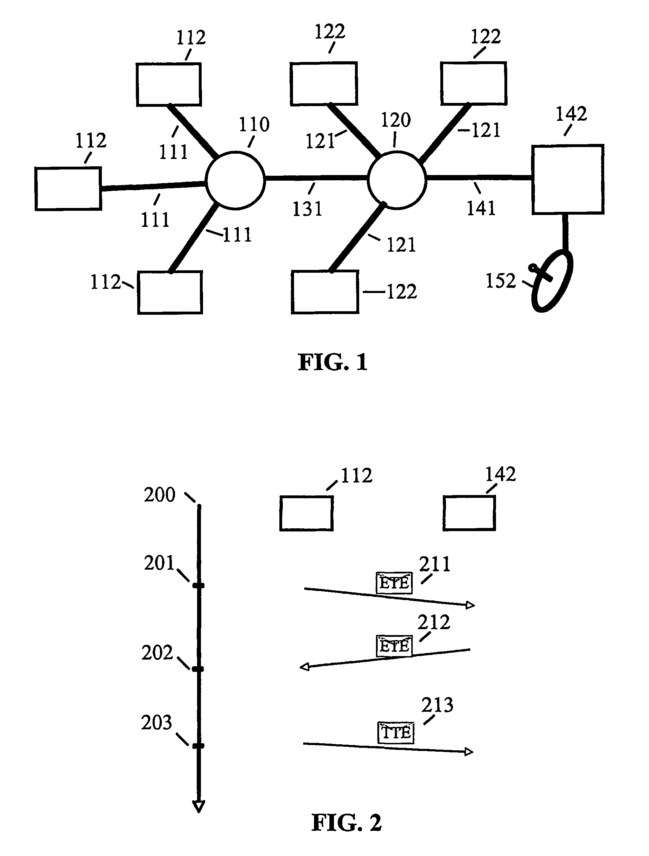

Fig. 1 zeigt ein verteiltes Computersystem mit zwei TTE-Sternkopplern 110, 120, wobei drei Knotenrechner 112 über Punkt-zu-Punkt Verbindungen 111 mit dem Sternkoppler 110 und drei weitere Knotenrechner 122 über Punkt-zu-Punkt Verbindungen 121 mit dem Sternkoppler 120 verbunden sind. Ein TT-Ethernet (TTE) Serviceknoten 142 ist über eine Punkt-zu-Punkt Verbindung 141 mit dem Sternkoppler 120 verbunden. Der TTE-Service Knoten 142 kann über einen GPS (Global Positioning System) Empfänger 152 verfügen, der von den GPS Satelliten ein Zeitsignal mit einer Genauigkeit von besser als eine µsec empfängt. Im TTE-Serviceknoten 142 befindet sich ein vertrauenswürdiger (trusted) TTE-Nachrichtenscheduler, der auf Anfrage von den Knotenrechnern 112 und 122 einen neuen Zeitplan für TTE-Nachrichten berechnet. Diese Anfrage kann über ETE Nachrichten erfolgen.

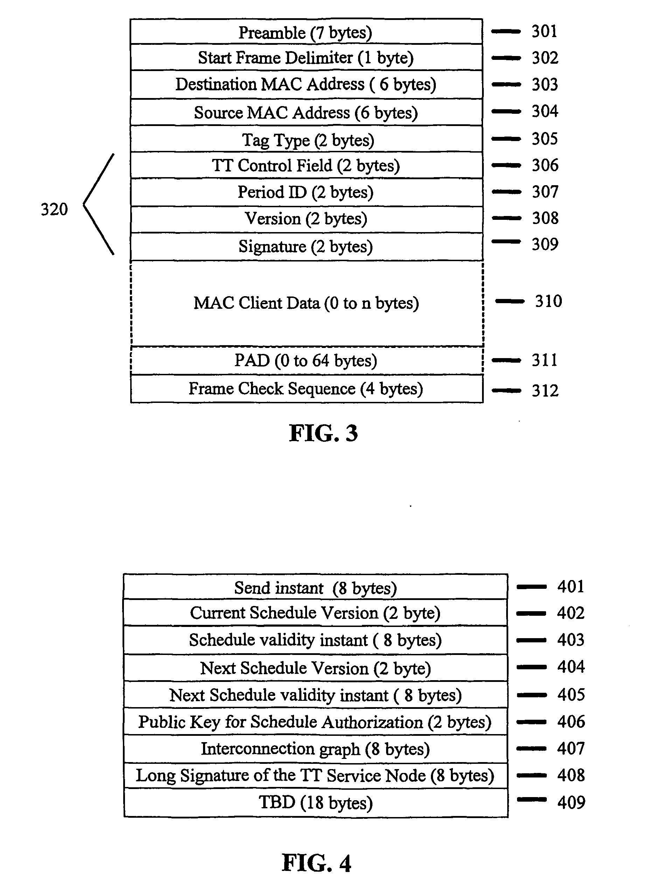

Fig. 2 zeigt eine Nachrichtenfolge, welche eine dynamische Änderung des Zeitplans ermöglicht. Auf der linken Seite ist das Fortschreiten der Zeit auf der Zeitachse 200 veranschaulicht. Zum Zeitpunkt 201 sendet der Knotenrechner 112 die ETE Nachricht 211 an den TTE-Service Knoten 142 mit der Anforderung, einen Plan für eine neue TTE-Nachrichtenfolge zu generieren. Nach Berechnung des Zeitplans für diese neue TTE-Nachrichtenfolge durch den TTE-Nachrichtenscheduler sendet der TTE-Service Knoten 142 die neue Zeitplaninformation in der Form eines TTE-Message Headers 320 in der ETE Nachricht 212 an den Knotenrechner 112 zurück. Der Knotenrechner 112 kopiert den TTE-Message Header 320 mit der Zeitplaninformation, einschließlich der Signatur 309 des TTE-Service Knoten 142 aus der Nachricht 212 in jede TTE-Nachricht 213 entsprechend Fig. 3 und sendet die erste TTE-Nachricht 213 dann zu dem in der Nachricht 213 enthaltenen periodischen Zeitpunkt 203 in das TTE-Netzwerk.

Fig. 3 zeigt einen möglichen Aufbau einer TTE-Nachricht. Durch den Ethernet Standard sind die Felder 301 bis 305 und die Felder 311 bis 312 vorgeben. In Fig. 3 ist ein zwei-Byte TTE-Kontrollfeld 306 vorgesehen. Das erste Byte des Feldes 306 enthält Kontrollinformationen über die TTE-Nachricht. Der Inhalt des Kontrollfeld 306 bestimmt das weitere Format des TTE-Message Headers 320, der den vom TTE-Nachrichtenscheduler berechneten Zeitplan für diese Nachricht enthält Im angeführten Beispiel umfasst der TTE-Message Header 320 neben dem Kontrollfeld 306 drei Felder. Im Feld 307 ist die Period ID der Nachricht angeführt. Dieses Feld wird vom TTE-Nachrichtenscheduler im Serviceknoten 142 berechnet und bestimmt die Periode und Phase der TTE-Nachricht 213. Das Versionsfeld 308 wird vom TTE-Nachrichtenscheduler verwaltet und beinhaltet die Versionsidentifikation des gegenständlichen Zeitplans. Das Feld 309 beinhaltet die Signatur des TTE-Nachrichtenscheduler, die der TTE-Nachrichtenscheduler mit dem geheimen Teil eines asymmetrischen Schlüsselpaars berechnet. Der öffentliche Teil dieses Schlüssels ist in der periodischen Konfigurationsnachricht (Fig. 4) des TTE-Service Knoten 142 im Feld 406 enthalten. In einfachen TTE-System, in denen Sicherheitsaspekte keine Rolle spielen sondern nur zufällige Fehler in der Hardware oder Software eines Knotenrechners beherrscht werden sollen, kann auch ein symmetrisches Schlüsselverfahren Anwendung finden oder es kann im Feld 406 eine einfache Checksum über die Felder 306 bis 308 des TTE-Message Header 320 enthalten sein.

Fig. 4 zeigt den Inhalt der Konfigurationsnachricht des TTE-Serviceknotens 142. Diese Konfigurationsnachricht wird mit einer a priori festgelegten Periode als TTE-Nachricht vom TTE-Serviceknotens 142 an alle TTE-Sternkoppler 110 und 120 sowie an alle Knotenrechner 112 und 122 gesendet. Die Dauer dieser Periode bestimmt die Zeitdauer, die ein TTE-Sternkoppler 110 oder 120 nach einem transienten Ausfall braucht, um wieder voll funktionstüchtig zu werden. Das Feld 401 beinhaltet den Sendezeitpunkt der Konfigurationsnacht. Da dem TTE-Serviceknoten 142 a priori bekannt ist, wann die nächste Konfigurationsnachricht gesendet werden muss, kann er den Inhalt der Konfigurationsnachricht vor dem in der Nachricht enthaltenen Sendezeitpunkt signieren, so dass die Nachricht exakt zu dem im Feld 401 enthaltenen Zeitpunkt gesendet werden kann. Wenn der TTE-Serviceknoten 142 über den GPS Empfänger 152 die weltweit synchronisierte GPS Zeit empfängt, so wird der Sendezeitpunkt 401 mit dieser GPS Zeit synchronisiert. Das Feld 402 beinhaltet die Versionsidentifikation des aktuellen Zeitplans. Die aktuelle Version ist seit dem im Feld 403 angegebenen Zeitpunkt gültig. Wenn dem TTE-Nachrichtenscheduler aufgrund einer Anforderung von einem Knotenrechner bekannt ist, dass in absehbarer Zukunft eine neue Zeitplanversion erstellt werden muss, so ist die Versionsidentifikation dieses zukünftigen Zeitplans im Feld 404 enthalten. Der zukünftige Zeitpunkt, ab dem diese Version gültig wird, ist im Feld 405 angegeben. Ab diesem Zeitpunkt verliert die vorangegangene Zeitplanversion ihre Gültigkeit. Der TTE-Nachrichtenscheduler muss eine neue Zeitplanversion erstellen, wenn der Sendezeitpunkt mindestens einer der Nachrichten in der neuen Version mit dem Sendezeitpunkt einer der Nachrichten in der vorangegangen Version in Konflikt steht. Das Feld 406 beinhaltet den öffentlichen Teil des Schlüssels, der zur Überprüfung der Authentizität des TTE-Message Headers 320 benötigt wird. Da dieser Schlüssel relativ kurz ist (um Bandbreite zu sparen) muss er vom TTE-Nachrichtenscheduler öfters geändert werden. Z.B. kann mit jeder neuen Scheduler Version ein neuer Schlüssel bereitgestellt werden. Fig. 4 beinhaltet die Informationen über den Verbindungsgraphen der TTE-Sternkoppler. Diese Information wird benötigt um entscheiden zu können, ob eine eintreffende TTE-Nachricht im Sternkoppler bis zu dem in TTE-Nachricht enthaltenen Sendezeitpunkt zu verzögern ist. Da entsprechend der österreichischen Patentanmeldung A 558/2007 alle TTE-Sternkoppler über eine hochpräzise Uhrensynchronisation verfügen, ist die Präzision (Kopetz, H. (1997). Real-Time Systems, Design Principles for Distributed Embedded Applications; ISBN: 0-7923-9894-7. Boston. Kluwer Academic Publishers) der Sendezeitpunkte von Nachrichten, die von den TTE-Sternkoppler weitergeleitet werden systemweit bekannt und sehr gut. Deshalb kann jeder Sternkoppler eine Nachricht, die direkt von einem anderen Sternkoppler kommt, ohne Verzögerung sofort übertragen. Geht eine Nachricht jedoch von einem Knotenrechner 112 aus, so muss der zuständige Sternkoppler 120 zuerst überprüfen, ob der in der TTE-Nachricht enthaltene TTE-Message Header 320 authentisch signiert und die Zeitplanversion gegenwärtig gültig ist. Dann wird die TTE-Nachricht bis zu dem in der Nachricht enthaltenen durch die Signatur des Schedulers gesicherten periodischen Sendezeitpunkt verzögert, um sie exakt zu diesem Zeitpunkt in das TTE-Netzwerk senden zu können. Diese Verzögerung ist auch notwendig, weil ein Knotenrechner einige Zeit vor dem in der Nachricht enthaltenen Sendezeitpunkt die TTE-Nachricht an den TTE-Sternkoppler senden kann, um die geringere Präzision der lokalen Uhrensynchronisation im Knotenrechner 112 abzufangen. Zusätzlich wird durch diese Massnahme verhindert, dass ein fehlerhafter Knotenrechner TTE-Nachrichten zu Zeitpunkten in das TTE-Netzwerk sendet, die zu einem Konflikt mit den korrekten TTE-Nachrichten der anderen Knotenrechnern führen können. Im Feld 408 der Konfigurationsnachricht ist eine lange Signatur des TTE-Serviceknotens 142 enthalten. Mit dieser Signatur wird der Inhalt der Felder 401 bis 407 der Konfigurationsnachricht gesichert. Der öffentliche Teil des asymmetrischen Schlüssels, mit dem diese Signatur überprüft werden kann, wird den TTE-Sternkopplern vor dem Betrieb des Systems über einen gesicherten Kanal mitgeteilt. Anderenfalls kann dieser Schlüssel auch vor der Inbetriebnahme des Systems in ein tamperresistant Register des TTE-Sternkopplers geschrieben werden. Wir bezeichnen ein Register ist tamperresistant, wenn dessen Inhalt von einer nicht authorisierten Instanz nicht geändert werden kann.

In TT Ethernet Systemen, die in sicherheitskritischen Anwendungen eingesetzt werden, kann eine Kombination von statischen und dynamischen Schedules notwendig werden. Da in vielen sicherheitskritischen Anwendungen die Zeitpläne für sicherheitsrelevante TTE-Nachrichten zertifiziert werden müssen, dürfen diese zertifizierten statischen Zeitpläne während des Betriebs nicht geändert werden. Diese statischen Zeitpläne werden deshalb vor dem Echtzeitbetrieb in einem non-volatile (nicht-flüchtigen) Speicher im TTE-Sternkoppler abgelegt. Wenn nun während des Betriebes, (z.B. aufgrund eines Fehlers im TTE-Nachrichtenscheduler) vom TTE-Sternkoppler ein Konflikt zwischen einer zertifizierten statischen TTE-Nachricht und einer vom TTE-Nachrichtenscheduler eingeplanten dynamischen TTE-Nachricht erkannt wird, so wird der TTE-Sternkoppler die dynamische TTE-Nachricht verwerfen und die statische TTE-Nachricht konfliktfrei senden. In diesem Fall sendet der TTE-Sternkoppler eine Diagnosemeldung an einen Serviceknoten. Diese Diagnosemeldung kann vom TTE-Sternkoppler signiert werden, um einer Fälschung von Diagnosenachrichten vorzubeugen. Wenn jeder Sternkoppler periodisch eine TTE Diagnosenachricht an einen Serviceknoten sendet, so können diese TTE Diagnosenachrichten als Lebenszeichen (heart beat) der Sternkopplers interpretiert werden und zur schnellen Erkennung des Ausfall eines TTE-Sternkopplers dienen.

Die hier beschriebene konkrete Realisierung der Erfindung stellt nur eine von vielen Realisierungsmöglichkeiten dieser Erfindung dar.

## Patentansprüche

1. Kommunikationsverfahren zur Übertragung von TT-(time-triggered)-Ethernet Nachrichten in einem verteilten Echtzeitsystem, bestehend aus einer Vielzahl von Knotenrechnern (112, 122), wobei jeder Knotenrechner über mindestens einen Ethernetkontroller verfügt, der über eine Datenleitung (111, 121) mit einem dem Knotenrechner eindeutig zugeordneten Port eines TTE-(time-triggered Ethernet)-Sternkopplers (110) direkt verbunden ist, und wobei mehrere TTE-Sternkoppler über eine oder mehrere Datenleitungen (131) untereinander direkt oder indirekt verbunden sind um ein TTE-Netzwerk zu bilden,
**dadurch gekennzeichnet, dass**
ein TTE-Nachrichtenscheduler konfliktfreie Zeitpläne für eine Anzahl von zeitgesteuerten Nachrichten dynamisch berechnet und den für jeden Knoten vorgesehenen Zeitplan mit dem geheimen Teil einer public-key Signatur signiert, bevor er diesen Zeitplan an den entsprechenden Knotenrechner sendet, und wobei jeder Knotenrechner den signierten periodischen Zeitplan, welcher in Form eines TTE-Message Headers (320) in einer ETE-(event-triggered Ethemet)-Nachricht vom TTE-Nachrichtenscheduler an den Knotenrechner gesendet worden ist, in jede dynamisch berechnete TTE-Nachricht einbaut, und wobei die TTE-Sternkoppler überprüfen, ob jede dynamisch berechnete TTE-Nachricht einen authentisch signierten Zeitplan enthält.

2. Kommunikationsverfahren nach Anspruch 1, **dadurch gekennzeichnet, dass** ein TTE-Nachrichtenscheduler die konfliktfreien Zeitpläne für eine Anzahl von zeitgesteuerten Nachrichten dynamisch berechnet und mit einem einfachen symmetrischen Schlüssel signiert, bevor er diesen Zeitplan an den entsprechenden Knotenrechner sendet, und wobei jeder Knotenrechner den signierten periodischen Zeitplan des TTE-Message Headers (320) in jede dynamisch berechnete TTE-Nachricht einbaut, und wobei die TTE-Sternkoppler überprüfen, ob jede dynamisch berechnete TTE-Nachricht eine authentisch signierten Zeitplan enthält.

3. Kommunikationsverfahren nach Anspruch 1 oder 2, **dadurch gekennzeichnet, dass** alle Sternkoppler von einem Serviceknoten eine Konfigurationsnachricht mit folgendem Inhalt enthalten: Sendezeitpunkt der Nachricht, aktuelle Schedule Version, Startzeitpunkt der Gültigkeit der aktuellen Schedule Version, folgende Schedule Version, Startzeitpunkt der Gültigkeit der folgenden Schedule Version, aktueller public-key zur Überprüfung der Scheduler Signatur (309) einer TTE-Nachricht, Verbindungsstruktur der TTE-Sternkoppler, wobei der Nachrichten-Inhalt durch eine elektronische Signatur des TTE-Nachrichtenschedulers gesichert ist.

4. Kommunikationsverfahren nach einem der Ansprüche 1 bis 3, **dadurch gekennzeichnet, dass** der Serviceknoten eine Konfigurationsnachricht vor dem in der Nachricht enthaltenen Sendezeitpunkt aufbaut und signiert, und exakt zu dem in der Konfigurationsnachricht enthaltenen Sendezeitpunkt zu senden beginnt.

5. Kommunikationsverfahren nach einem der Ansprüche 1 bis 4, **dadurch gekennzeichnet, dass** der Sternkoppler diese gesicherte Konfigurationsnachricht periodisch sendet, wobei die Sendeperiode und Phase in der Konfigurationsnachricht enthalten sind, und wo der Empfangszeitpunkt dieser Nachricht von den TTE-Sternkopplern und den Knotenrechnern zur Synchronisation ihrer Uhren verwendet wird.

6. Kommunikationsverfahren nach einem der Ansprüche 1 bis 5, **dadurch gekennzeichnet, dass** der Serviceknoten den zur Berechnung des ITE-Headers (320) verwendeten Schlüssel während des Betriebs ändert.

7. Kommunikationsverfahren nach einem der Ansprüche 1 bis 6, **dadurch gekennzeichnet, dass** jedem Sternkoppler der public key des TTE-Serviceknoten (142) a priori über einen gesicherten Kanal bekannt gegeben wird.

8. Kommunikationsverfahren nach einem der Ansprüche 1 bis 7, **dadurch gekennzeichnet, dass** eine von einem Knotenrechner beim nächstgelegenen Sternkoppler eintreffende TTE-Nachricht genau dann vom TTE-Sternkoppler zum Weiterleiten freigegeben wird, wenn der in der Nachricht enthaltene Sendezeitpunkt mit der TTE-Sternkopplerzeit übereinstimmt.

9. Kommunikationsverfahren nach einem der Ansprüche 1 bis 8, **dadurch gekennzeichnet, dass** eine von einem Sternkoppler eintreffende TTE-Nachricht vom nächsten Sternkoppler sofort zur Weiterleitung freigegeben wird.

10. Kommunikationsverfahren nach einem der Ansprüche 1 bis 9, **dadurch gekennzeichnet, dass** zwischen statischen TTE-Schedules und dynamischen TTE-Schedules unterschieden wird.

11. Kommunikationsverfahren nach einem der Ansprüche 1 bis 10, **dadurch gekennzeichnet, dass** die Zeitpunkte der Freigabe zur Weiterleitung der statischen Schedules in den TTE Sternkopplem a priori in einem non-volatile Speicher abgelegt werden.

12. Kommunikationsverfahren nach einem der Ansprüche 1 bis 11, **dadurch gekennzeichnet, dass** ein Sternkoppler eine dynamisch eingeplante TTE-Nachricht verwirft oder in eine Warteschlange stellt, wenn ihre Schedule mit einer statisch eingeplanten TTE Nachricht in zeitlichem Konflikt steht.

13. Kommunikationsverfahren nach einem der Ansprüche 1 bis 12, **dadurch gekennzeichnet, dass** jeder Sternkoppler periodisch eine TTE-Diagnosenachricht exakt zu dem in der Nachricht enthaltenen Sendezeitpunkt an den Serviceknoten zum Senden freigibt.

14. Kommunikationsverfahren nach einem der Ansprüche 1 bis 13, **dadurch gekennzeichnet, dass** die Diagnosenachricht vom Sternkoppler signiert wird.

15. TTE-Sternkoppler zur Vermittlung von TTE-Ethernet Nachrichten in einem verteilten Echtzeitsystem, bestehend aus einer Vielzahl von Knotenrechnern (112, 122), wobei jeder Knotenrechner über mindestens einen Ethernetkontroller verfügt, der über eine Datenleitung (111, 121) mit einem dem Knotenrechner eindeutig zugeordneten Port eines TTE-Sternkopplers (110) direkt verbunden ist, **dadurch gekennzeichnet, dass** der TTE-Sternkoppler dazu eingerichtet ist, ein Verfahren nach einem der Ansprüche 1 bis 14 auszuführen.

## Claims

1. A communication method for transmitting TT (time-triggered) Ethernet messages in a distributed real-time system, consisting of a plurality of node computers (112, 122), with each node computer having at least one Ethernet controller, which by way of a data line (111, 121) is directly connected to a port of a TTE (time-triggered Ethernet) star coupler (110), said port being uniquely associated with the node computer, and with a plurality of TTE star couplers being directly or indirectly connected among each other by way of one or more data lines (131) in order to form a TTE network, **characterized in that** a TTE message scheduler dynamically calculates the conflict-free schedules for a number of time-controlled messages and signs the schedule provided for each node with a secret part of a public-key signature before it transmits said schedule to the corresponding node computer, and each node computer integrates the signed periodic schedule, which is transmitted to the node computer in the form of a TTE message header (320) of an ETE (event-triggered Ethernet) message, into each dynamically calculated TTE message, and the TTE star couplers check whether each dynamically calculated TTE message contains an authentically signed schedule.

2. A communication method according to claim 1, **characterized in that** the TTE message scheduler dynamically calculates the conflict-free schedules for a number of time-controlled messages and signs them with a simple symmetrical key before it transmits this schedule to the respective node computer, and each node computer integrates the signed periodic schedule of the TTE message header (320) into each dynamically calculated TTE message, and the TTE star couplers check whether each dynamically calculated TTE message contains an authentically signed schedule.

3. A communication method according to claim 1 or 2, **characterized in that** all star couplers contain a configuration message from a service node with the following content: time of transmission of message, current schedule version, starting time of the validity of the current schedule version, following schedule version, starting time of validity of the following schedule version, current public key for checking the schedule signature (309) of a TTE message, connection structure of the TTE star coupler, with the content of the message being secured by an electronic signature of the TTE network scheduler.

4. A communication method according to one of the claims 1 to 3, **characterized in that** the service node establishes and signs a configuration message before the transmission time contained in the message and starts to transmit precisely at the transmission time contained in the configuration message.

5. A communication method according to one of the claims 1 to 4, **characterized in that** the star coupler transmits this secured configuration message periodically, with the transmission period and phase being contained in the configuration message, and where the receiving time of this message being used by the TTE star couplers and the node computers are synchronizing their clocks.

6. A communication method according to one of the claims 1 to 5, **characterized in that** the service node changes the key used for the calculation of the TTE header (320) during the operation.

7. A communication method according to one of the claims 1 to 6, **characterized in that** each star coupler is informed in advance via a secured channel about public key of the TTE service node (142).

8. A communication method according to one of the claims 1 to 7, **characterized in that** a TTE message arriving from a node computer in the closest star coupler will be released by the TTE star coupler for retransmission at precisely the time when the transmission time contained in the message coincides with the TTE star coupler time.

9. A communication method according to one of the claims 1 to 8, **characterized in that** a TTE message arriving from a star coupler will immediately be released by the next star coupler for retransmission.

10. A communication method according to one of the claims 1 to 9, **characterized in that** it is distinguished between static TTE schedules and dynamic TTE schedules.

11. A communication method according to one of the claims 1 to 10, **characterized in that** the times for release for retransmission of the static schedules in the TTE star couplers are stored in advance in a non-volatile memory.

12. A communication method according to one of the claims 1 to 11, **characterized in that** a star coupler rejects a dynamically planned TTE message or places the same in a queue if its schedule is in temporal conflict with a static planned TTE message.

13. A communication method according to one of the claims 1 to 12, **characterized in that** each star coupler periodically releases a TTE diagnostic message for transmission to the service node precisely at the transmission time contained in the message.

14. A communication method according to one of the claims 1 to 13, **characterized in that** the diagnostic message is signed by the star coupler.

15. A TTE star coupler for relaying TTE Ethernet messages in a distributed real-time system, consisting of a plurality of node computers (112, 122), with each node computer having at least one Ethernet controller, which by way of a data line (111, 121) is directly connected to a port of a TTE (time-triggered Ethernet) star coupler (110), said port being uniquely associated with the node computer, **characterized in that** the TTE star coupler is set up to perform a method according to one of the claims 1 to 14.

## Revendications

1. Procédé de communication permettant de transmettre des messages TT (de l'anglais time-triggered pour à déclenchement temporel) dans un système temps réel distribué, composé d'une pluralité de calculateurs de noeud (112, 122), avec lequel chaque calculateur de noeud dispose au moins d'un contrôleur Ethernet qui est relié directement par le biais d'une ligne de données (111, 121) à un port d'un coupleur en étoile TTE (Ethernet à déclenchement temporel) (110), lequel port étant attribué de manière univoque au calculateur de noeud, et avec lequel plusieurs coupleurs en étoile TTE sont reliés entre eux directement ou indirectement par le biais d'une ou de plusieurs lignes de données (131) pour former un réseau TTE,
**caractérisé en ce que**
un ordonnanceur de messages TTE calcule dynamiquement des plannings temporels sans conflit pour un certain nombre de messages commandés en fonction du temps et signe le planning temporel prévu pour chaque noeud avec la partie sécrète d'une signature de clé publique avant qu'il envoie ce planning temporel au calculateur de noeud correspondant, et chaque calculateur de noeud intégrant le planning temporel périodique signé, que l'ordonnanceur de messages TTE a envoyé au calculateur de noeud sous forme d'un en-tête de message TTE (320) dans un message ETE (de l'anglais event-triggered Ethernet pour Ethernet à déclenchement par un événement), dans chaque message TTE calculé dynamiquement, et les coupleurs en étoile TTE vérifiant si chaque message TTE calculé dynamiquement contient un planning temporel ayant une signature authentique.

2. Procédé de communication selon la revendication 1, **caractérisé en ce qu'**un ordonnanceur de messages TTE calcule dynamiquement les plannings temporels sans conflit pour un certain nombre de messages commandés en fonction du temps et les signe avec une simple clé symétrique avant qu'il envoie ce planning temporel au calculateur de noeud correspondant, chaque calculateur de noeud intégrant le planning temporel périodique signé de l'en-tête de message TTE (320) dans chaque message TTE calculé dynamiquement, et les coupleurs en étoile TTE vérifiant si chaque message TTE calculé dynamiquement contient un planning temporel ayant une signature authentique.

3. Procédé de communication selon la revendication 1 ou 2, **caractérisé en ce que** tous les coupleurs en étoile reçoivent d'un noeud de service un message de configuration ayant le contenu suivant : instant d'émission du message, version actuelle de la planification, instant de début de la validité de la version actuelle de la planification, version suivante de la planification, instant de début de la validité de la version suivante de la planification, clé publique actuelle servant à vérifier la signature de l'ordonnanceur (309) d'un message TTE, structure de liaison des coupleurs en étoile TTE, le contenu du message étant sécurisé par une signature électronique de l'ordonnanceur de messages TTE.

4. Procédé de communication selon l'une des revendications 1 à 3, **caractérisé en ce que** le noeud de service établit et signe un message de configuration avant l'instant d'émission contenu dans le message, et **en ce qu'**il commence à émettre exactement à l'instant d'émission contenu dans le message de configuration.

5. Procédé de communication selon l'une des revendications 1 à 4, **caractérisé en ce que** le coupleur en étoile émet périodiquement ce message de configuration sécurisé, la période d'émission et la phase étant contenues dans le message de configuration et l'instant de réception de ce message étant employé par les coupleurs en étoile TTE et les calculateurs de noeud pour la synchronisation de leurs horloges.

6. Procédé de communication selon l'une des revendications 1 à 5, **caractérisé en ce que** le noeud de service modifie durant le service la clé employée pour calculer l'en-tête TTE (320).

7. Procédé de communication selon l'une des revendications 1 à 6, **caractérisé en ce que** la clé publique du noeud de service TTE (142) est annoncée à chaque coupleur en étoile a priori par un canal sécurisé.

8. Procédé de communication selon l'une des revendications 1 à 7, **caractérisé en ce qu'**un message TTE arrivant d'un calculateur de noeud dans le coupleur en étoile le plus proche est libéré par le coupleur en étoile TTE à des fins de transmission exactement lorsque l'instant d'émission contenu dans le message coïncide avec le temps du coupleur en étoile TTE.

9. Procédé de communication selon l'une des revendications 1 à 8, **caractérisé en ce qu'**un message TTE arrivant d'un coupleur en étoile est libéré immédiatement par le prochain coupleur en étoile à des fins de transmission.

10. Procédé de communication selon l'une des revendications 1 à 9, **caractérisé en ce que** l'on fait une différence entre des planifications TTE statiques et des planifications TTE dynamiques.

11. Procédé de communication selon l'une des revendications 1 à 10, **caractérisé en ce que** les instants de libération à des fins de transmission des planifications statiques sont déposés dans les coupleurs en étoile TTE a priori dans une mémoire non volatile.

12. Procédé de communication selon l'une des revendications 1 à 11, **caractérisé en ce qu'**un coupleur en étoile rejette un message TTE planifié dynamiquement ou le met dans une file d'attente lorsque la planification du message présente un conflit temporel avec un message TTE planifié statiquement.

13. Procédé de communication selon l'une des revendications 1 à 12, **caractérisé en ce que** chaque coupleur en étoile libère périodiquement un message de diagnostic TTE à l'attention du noeud de service à des fins d'émission exactement à l'instant d'émission contenu dans le message.

14. Procédé de communication selon l'une des revendications 1 à 13, **caractérisé en ce que** le message de diagnostic est signé par le coupleur en étoile.

15. Coupleur en étoile TTE servant à communiquer des messages TTE dans un système temps réel distribué, composé d'une pluralité de calculateurs de noeud (112, 122), chaque calculateur de noeud disposant au moins d'un contrôleur Ethernet qui est relié directement par le biais d'une ligne de données (111, 121) à un port d'un coupleur en étoile TTE (110), lequel port étant attribué de manière univoque au calculateur de noeud, **caractérisé en ce que** le coupleur en étoile TTE est conçu pour exécuter un procédé selon l'une des revendications 1 à 14.
